# EUROPÄISCHE PATENTSCHRIFT

(11) **EP 4 547 507 B1**
(45) Veröffentlichungstag und Bekanntmachung des Hinweises auf die Patenterteilung: **25.03.2026**
(21) Anmeldenummer: 23730808.5
(22) Anmeldetag: 05.06.2023
(51) Int. Cl.: B60J 5/04, B60H 3/00

(54) **FAHRZEUG MIT EINEM BEDUFTUNGSSYSTEM ZUR BEDUFTUNG EINES EINSTIEGSBEREICHS EINES FAHRZEUGS**
VEHICLE HAVING A FRAGRANCING SYSTEM FOR FRAGRANCING A BOARDING AREA OF A VEHICLE
VÉHICULE COMPRENANT UN SYSTÈME DE DIFFUSION DE PARFUM POUR PARFUMER UN HABITCALE D'UN VÉHICULE

(30) Priorität: 29.06.2022 DE 102022116158
(43) Veröffentlichungstag der Anmeldung: 07.05.2025
(73) Patentinhaber: Bayerische Motoren Werke Aktiengesellschaft, 80809 München (DE)
(72) Erfinder: COFFINET, Annabelle, 80797 München (DE)
(86) Internationale Anmeldenummer: PCT/EP2023/064986
(87) Internationale Veröffentlichungsnummer: WO 2024/002625

(56) Entgegenhaltungen:
- EP-A1- 4 331 880
- DE-A1- 102020 121 402
- JP-A- 2006 273 209
- JP-A- 2007 283 975
- JP-U- 3 221 006

## Beschreibung

Die Erfindung betrifft ein Beduftungssystem zur Beduftung eines Einstiegsbereichs eines Fahrzeugs.

Es gibt bereits Bedufter in Fahrzeugen mit dem Fokus, einen angenehmen Duft im Fahrzeuginnenraum zu verbreiten. In der In der DE 10 2015 110 702 A1 wird ein Duftträger vorgeschlagen, der seinen Duft auf ein Duftträgerelement in Form einer Haftfolie übertragen kann. Aus dem Gebrauchsmuster 90 01 115.5 ist ein selbsthaftender Duftträger bekannt.

Aus den Dokumenten DE 10 2020 121402 A1 und JP 2006 273209 A sind weitere Duftungssysteme bekannt.

Allerdings gibt es noch Verbesserungsbedarf im Bereich der Beduftung von Einstiegsbereichen von Fahrzeugen.

Deshalb ist es eine Aufgabe dieser Erfindung, ein verbessertes Beduftungssystem zur Beduftung eines Einstiegsbereichs eines Fahrzeugs bereitzustellen. Diese Aufgabe wird erfindungsgemäß durch die Merkmale der unabhängigen Patentansprüche gelöst. Vorteilhafte Ausgestaltungen sind Gegenstand der abhängigen Ansprüche.

Vorgeschlagen wird ein Fahrzeug, aufweisend eine Fahrzeugtüre, die einen Fensterrahmen und eine Türdichtung aufweist, sowie eine an einer Innenseite der Fahrzeugtüre befestigte Trägerfolie zur Beduftung eines Einstiegsbereichs des Fahrzeugs, sowie eine Trägerfolie zur Beduftung eines Einstiegsbereichs eines Fahrzeugs, wobei die Trägerfolie mit einem Duftstoff versehen ist und derart gebildet ist, dass sie mit einer Rückseite davon an einem inneren Bereich einer Fahrzeugtüre derart befestigbar ist, dass sie bei geöffneter Fahrzeugtüre Duft in den Einstiegsbereich abgibt, und dass sie bei geschlossener Türe abgedeckt ist.

In einer Ausgestaltung ist vorgesehen, dass die Rückseite derart gebildet ist, dass sie zumindest teilweise klebend ist, oder dass sie mittels statischer Haftung an einem vorgegebenen Bereich der Fahrzeugtüre befestigbar ist.

In einer Ausgestaltung ist vorgesehen, dass die Form der Trägerfolie an die Form des Bereichs der Fahrzeugtüre angepasst ist, an dem sie zu befestigen ist.

In einer Ausgestaltung ist vorgesehen, dass die Trägerfolie in einem oberen und dem Heck des Fahrzeugs zugewandten Bereich der Fahrzeugtüre angeordnet ist.

In einer Ausgestaltung ist vorgesehen, dass die Trägerfolie an der Türdichtung oder in einem Bereich zwischen der Türdichtung und dem Fensterrahmen angeordnet ist.

In einer Ausgestaltung ist vorgesehen, dass die Trägerfolie in einem Bereich eines Türinnenblechs und oberhalb eines Türschlosses angeordnet ist.

In einer Ausgestaltung ist vorgesehen, dass die Fahrzeugtüre eine Fahrertüre ist.

In einer Ausgestaltung ist vorgesehen, dass das Fahrzeug zusätzlich ein oder mehrere Mittel aufweist, die zur optischen und/oder akustischen Inszenierung des beim Öffnen der Fahrzeugtüre durch die Trägerfolie bereitgestellten Dufts nach vorgegebenen Kriterien eingerichtet sind.

Ferner wird eine Fahrzeugtüre bereitgestellt, an deren Innenseite eine mit einem Duftstoff versehene Trägerfolie befestigt ist.

In einer Ausgestaltung ist vorgesehen, dass die Fahrzeugtüre einen Fensterrahmen und eine Türdichtung aufweist, und wobei die Trägerfolie in einem oberen und dem Heck des Fahrzeugs zugewandten Bereich der Fahrzeugtüre angeordnet ist.

In einer Ausgestaltung ist vorgesehen, dass die Trägerfolie an der Türdichtung oder in einem Bereich zwischen der Türdichtung und dem Fensterrahmen angeordnet ist.

In einer Ausgestaltung ist vorgesehen, dass die Trägerfolie in einem Bereich eines Türinnenblechs und oberhalb eines Türschlosses angeordnet ist.

In einer Ausgestaltung ist vorgesehen, dass die Fahrzeugtüre eine Fahrertüre ist. Ferner wird ein Fahrzeug bereitgestellt, aufweisend die Fahrzeugtüre. In einer Ausgestaltung ist vorgesehen, dass das Fahrzeug zusätzlich ein oder mehrere Mittel aufweist, die zur optischen und/oder akustischen Inszenierung des beim Öffnen der Fahrzeugtüre durch die Trägerfolie bereitgestellten Dufts nach vorgegebenen Kriterien eingerichtet sind.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen.

Bevorzugte Ausführungsformen der Erfindung werden nachfolgend anhand der beigefügten Zeichnung näher erläutert.
Fig. 1 zeigt eine schematische Darstellung bevorzugter Positionen der Trägerfolie an der Fahrzeugtüre.
Fig. 2 zeigt eine schematische Darstellung einer Positionierung der Trägerfolie an einem oberen Bereich der Fahrzeugtüre gemäß einer Ausführung der vorliegenden Erfindung.
Fig. 3 zeigt eine schematische Darstellung einer Positionierung der Trägerfolie an einem Türinnenblech der Fahrzeugtüre gemäß einer weiteren Ausführung der vorliegenden Erfindung.

In den nachfolgenden Figurenbeschreibungen sind gleiche Elemente bzw. Funktionen mit gleichen Bezugszeichen versehen.

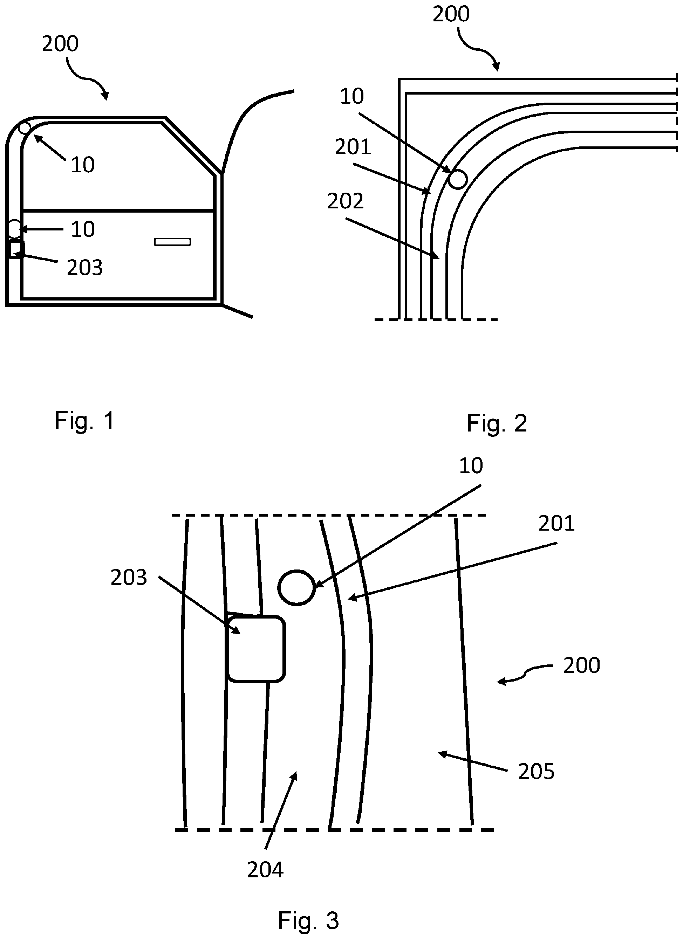

Das vorgeschlagene Beduftungssystem (Trägerfolie 10) dient dazu, einen Einstiegsbereich eines Fahrzeugs zu beduften, wenn die Fahrzeugtüre 200 geöffnet oder geschlossen wird. Besonders bevorzugt soll der Fahrer den Duft erleben, d.h. die Fahrzeugtüre 200 ist vorzugsweise eine Fahrertüre, wobei diese sowohl eine Fahrertüre eines Rechtslenkers als auch eine Fahrertür eines Linkslenkers (wie in den Figuren gezeigt) sein kann. In beiden Ausführungen wird durch Öffnen der Fahrzeugtüre 200 das Beduftungssystem (Trägerfolie 10) von der Fahrzeugtüre 200 freigegeben, so dass Duftmoleküle in den Einstiegsbereich abgeben werden können. In Figur 1, welche eine Ansicht einer Innenseite einer Fahrzeugtüre 200 zeigt, sind bevorzugte Positionen der mit einem Duftstoff versehenen Trägerfolie 10 dargestellt, die unter Bezugnahme zu Figuren 2 und 3 genauer beschrieben werden.

Das Beduftungssystem besteht aus einer (sehr) dünnen Trägerfolie 10, die vorteilhaft als eine Polymerfolie gebildet ist. Auf einer Seite der Trägerfolie 10 oder in der Trägerfolie 10 ist ein Duftstoff integriert. Dieser Duftstoff wird ständig abgegeben, benötigt also keinen Aktivator wie z.B. einen Luftzug oder Wärme. Alternativ kann der Duftstoff auch so kreiert sein, dass er durch einen aufgrund des Öffnens der Fahrzeugtüre 200 auftretenden und darauf auftreffenden Luftstrom aktiviert wird.

Die Trägerfolie 10 wird mit einer unteren Fläche davon in einem dem Fahrzeuginneren zugewandten Bereich der Fahrzeugtüre 200 befestigt, z.B. mittels vollflächigem oder punktuellem Kleben, oder mittels einzelner Klebestreifen. In einer Ausführung ist sie rückstandsfrei abnehmbar befestigt, z.B. mittels statischer Haftung oder einem geeigneten Klebstoff. Sie kann aber auch in eine in dem Bereich des Rahmens der Fahrzeugtüre 200 vorgesehene Befestigungseinrichtung einklemmbar oder einschiebbar sein. Die Art der Anbringung spielt lediglich eine untergeordnete Rolle für die Beduftung. Wichtig ist, dass die Trägerfolie 10 z.B. an einem Blech der Fahrzeugtüre 200 oder dem Gummi der Türdichtung 201 stabil anhaftet und sich nicht nach mehrmaligem Öffnen und Schließen der Fahrzeugtüre 200 löst.

Die Befestigungsposition der Trägerfolie 10 ist dabei so an der Fahrzeugtüre 200 gewählt, dass sie bei geschlossener Fahrzeugtüre 200 nicht sichtbar ist und derart durch z.B. eine Dichtung oder den Karosserierahmen verdeckt ist, dass sie keinen Duftstoff nach außen abgeben kann, d.h. dass der Duft nicht wahrnehmbar ist.

Eine bevorzugte Befestigungsposition der Trägerfolie 10 ist an einem oberen Bereich der Fahrzeugtüre 200 in der Nähe des Kopfes eines Insassen und in etwa auf dessen Augenhöhe, wie in Figur 2 (Blick von innerhalb des Fahrzeugs auf die Innenseite der Fahrzeugtüre 200) in einem vergrößerten Ausschnitt eines oberen Bereichs der Fahrzeugtüre 200 gezeigt. So kann der Duft sowohl beim Ein- als auch beim Aussteigen sehr gut wahrgenommen werden. Die beschriebene Befestigungsposition kann dabei, wie ebenfalls in Figur 2 gezeigt, an einem Übergang zwischen einem oberen Bereich der Fahrzeugtüre 200 und einem dem Heck zugewandten hinteren Bereich der Fahrzeugtüre 200 liegen, was im Wesentlichen der Augenhöhe eines Insassen entspricht.

Die Trägerfolie 10 ist in der in Figur 2 gezeigten Ausführung in einem Übergangsbereich zwischen Türdichtung 201 und Fensterrahmen 202 angeordnet und wird beim Schließen der Fahrzeugtüre 200 in die Türdichtung 201 eingepresst. Die Trägerfolie 10 ist dabei so dünn, dass sie die Funktion der Türdichtung 201 nicht beeinträchtigt.

Eine alternative oder zusätzliche Befestigungsposition der Trägerfolie 10 befindet sich an einem Türinnenblech 204 der Fahrzeugtüre 200, genauer dem in Richtung Innenbereich der Türdichtung 201 vorgesehenen Teil des Türinnenblechs 204 (Bezugszeichen 205 markiert den äußeren Teil, der durch die Türdichtung 201 vom inneren Teil 204 getrennt ist) oberhalb des (lediglich schematisch angedeuteten) Türschlosses 203, wie in Figur 3 gezeigt. Die Position kann aber auch weiter oben, also bis knapp unter dem Fenster, variiert werden. In dieser Ausführung wird die Trägerfolie 10 ebenfalls vollständig durch eine geschlossene Fahrzeugtüre 200 abgedeckt, ist also bei geschlossener Fahrzeugtüre 200 nicht sichtbar, und es kann kein Duftstoff nach außen abgeben werden, bzw. der Duft ist nicht wahrnehmbar. Diese Ausführung ist insbesondere dann vorteilhaft, wenn die Fahrzeugtüre 200 keinen Rahmen und damit keine Türdichtung 201 im Bereich der Verglasung aufweist. Auch in dieser Ausführung ist eine Beduftung beim Ein- und Aussteigen des Insassen gegeben.

Die Form der Trägerfolie 10 ist auf die jeweilige Form der Fahrzeugtüre 200 und die Position an der Fahrzeugtüre 200 angepasst. Sie kann auch für andere Fahrzeugtypen verwendet werden. Hierfür kann sie z.B. auf die passende Größe zugeschnitten werden.

Die Trägerfolie 10 kann sowohl durchsichtig oder dem Anbringungsort farblich angepasst sein, so dass sie vom Nutzer praktisch nicht wahrgenommen wird. Sie kann aber auch mit einer Farbe und/oder einem Muster oder Logo versehen sein, damit sie vom Nutzer wahrgenommen wird.

Auch kann z.B. ein Indikator wie z.B. ein Farbindikator vorgesehen sein, um die Menge des Duftstoffs anzuzeigen, so dass der Nutzer darüber informiert wird, dass er die Trägerfolie 10 z.B. noch länger nutzen kann oder dass er sie austauschen oder erneuern sollte, um das Dufterlebnis fortzuführen.

Die Trägerfolie 10 kann unterschiedliche Düfte aufweisen, die sich der Nutzer aussuchen kann, da die Trägerfolie 10 austauschbar ist. Vorteilhaft weist sie einen zur Fahrzeugmarke zugehörigen Duft (Signatur-Duft) auf, also einen Duft, den ein Nutzer mit der Fahrzeugmarke identifizieren kann oder soll. Alternativ können aber auch andere Düfte angeboten werden. Da die Trägerfolie 10 durch Entfernen oder durch Überkleben austauschbar ist, kann der Duft bei Bedarf also ausgetauscht werden.

Die Trägerfolie 10 sollte vorzugsweise mehrere Monate Duft abgeben können. Wie lange genau die Duftabgabe möglich ist, hängt unter anderem ab von der Größe der Trägerfolie 10, dem Material und dessen Fähigkeit, Duftmoleküle aufzunehmen und abzugeben, und von der Häufigkeit der Benutzung der Fahrzeugtüre 200 ab, also wie oft diese geöffnet wird und wie lange sie offen steht.

Durch die Verwendung einer Trägerfolie 10 wird die Handhabung der Beduftung stark vereinfacht, da z.B. keine Flüssigkeit in Fläschchen oder Ampullen mehr benötigt wird, die in eine Ausnehmung des Fahrzeugs eingebracht und gegebenenfalls mittels eines Aktuators aktiviert werden muss. Es wird also sowohl im Fahrzeug als auch beim Transport von Nachfüllteilen Platz gespart. Außerdem wird Müll reduziert.

Durch das vorgeschlagene Beduftungssystem erfolgt eine Beduftung des Türbereichs ausschließlich bei geöffneter Fahrzeugtüre 200, so dass ein Willkommens- und Verabschiedungsszenario erzeugt werden kann. Zusätzlich kann beim Öffnen der Fahrzeugtüre 200 eine optische und/oder akustische Inszenierung des Dufts durch entsprechende Mittel (Beleuchtung, Soundausgabe) erfolgen. Das Öffnen der Fahrzeugtüre 200 wird in der Regel sowieso durch mindestens ein Steuergerät erfasst, welches dann auch entsprechende Signale an die Mittel zur optischen und/oder akustischen Inszenierung ausgeben kann.

### Bezugszeichen

- 200: Fahrzeugtüre
- 201: Türdichtung
- 202: Fensterrahmen
- 203: Türschloss
- 204: Türinnenblech Innenseite 200
- 205: Türinnenblech Außenseite 200
- 10: Trägerfolie

## Patentansprüche

1. Fahrzeug, aufweisend eine Fahrzeugtüre (200), die einen Fensterrahmen (202) und eine Türdichtung (201) aufweist, sowie eine an einer Innenseite der Fahrzeugtüre (200) befestigte Trägerfolie (10) zur Beduftung eines Einstiegsbereichs des Fahrzeugs, wobei die Trägerfolie (10) mit einem Duftstoff versehen ist und derart mit einer Rückseite davon an einem inneren Bereich einer Fahrzeugtüre (200) befestigt ist, dass sie bei geöffneter Fahrzeugtüre (200) Duft in den Einstiegsbereich abgibt, und dass sie bei geschlossener Fahrzeugtüre (200) abgedeckt ist.

2. Fahrzeug nach Anspruch 1, wobei die Rückseite der Trägerfolie (10) derart gebildet ist, dass sie zumindest teilweise klebend ist, oder dass sie mittels statischer Haftung an einem vorgegebenen Bereich der Fahrzeugtüre (200) befestigbar ist.

3. Fahrzeug nach einem der vorhergehenden Ansprüche, wobei die Form der Trägerfolie (10) an die Form des Bereichs der Fahrzeugtüre (200) angepasst ist, an dem sie zu befestigen ist.

4. Fahrzeug nach einem der vorhergehenden Ansprüche, wobei die Trägerfolie (10) in einem oberen und dem Heck des Fahrzeugs zugewandten Bereich der Fahrzeugtüre (200) angeordnet ist.

5. Fahrzeug nach einem der vorhergehenden Ansprüche, wobei die Trägerfolie (10) an der Türdichtung (201) oder in einem Bereich zwischen der Türdichtung (201) und dem Fensterrahmen (202) angeordnet ist.

6. Fahrzeug nach einem der vorhergehenden Ansprüche,, wobei die Trägerfolie (10) in einem Bereich eines Türinnenblechs (204) und oberhalb eines Türschlosses (203) angeordnet ist.

7. Fahrzeug nach einem der vorhergehenden Ansprüche,, wobei die Fahrzeugtüre (200) eine Fahrertüre ist.

8. Fahrzeug nach einem der vorhergehenden Ansprüche, wobei das Fahrzeug zusätzlich ein oder mehrere Mittel aufweist, die zur optischen und/oder akustischen Inszenierung des beim Öffnen der Fahrzeugtüre (200) durch die Trägerfolie (10) bereitgestellten Dufts nach vorgegebenen Kriterien eingerichtet sind.

## Claims

1. Vehicle, comprising a vehicle door (200) which has a window frame (202) and a door seal (201), and a carrier film (10) which is fastened to an inner side of the vehicle door (200) and is intended for fragrancing a boarding region of the vehicle, wherein the carrier film (10) is provided with a fragrance and its rear side is fastened to an inner region of a vehicle door (200) in such a way that the carrier film releases fragrance into the boarding region when the vehicle door (200) is open, and is covered when the vehicle door (200) is closed.

2. Vehicle according to Claim 1, wherein the rear side of the carrier film (10) is designed such that it is at least partially adhesive, or such that it can be fastened to a predefined region of the vehicle door (200) by means of static adhesion.

3. Vehicle according to either of the preceding claims, wherein the shape of the carrier film (10) is matched to the shape of the region of the vehicle door (200) to which it is to be fastened.

4. Vehicle according to one of the preceding claims, wherein the carrier film (10) is arranged in an upper region of the vehicle door (200) that faces toward the rear of the vehicle.

5. Vehicle according to one of the preceding claims, wherein the carrier film (10) is arranged on the door seal (201) or in a region between the door seal (201) and the window frame (202).

6. Vehicle according to one of the preceding claims, wherein the carrier film (10) is arranged in a region of a door inner panel (204) and above a door lock (203).

7. Vehicle according to one of the preceding claims, wherein the vehicle door (200) is a driver's door.

8. Vehicle according to one of the preceding claims, wherein the vehicle additionally has one or more means configured to optically and/or acoustically indicate the fragrance provided by the carrier film (10) when the vehicle door (200) is being opened, in accordance with predefined criteria.

## Revendications

1. Véhicule, présentant une porte (200) de véhicule, qui présente un cadre (202) de fenêtre et un joint (201) de porte, ainsi qu'une feuille support (10) fixée sur une face interne de la porte (200) de véhicule et destinée à parfumer une zone d'accès du véhicule, la feuille support (10) étant pourvue d'une substance odoriférante et étant fixée à l'aide d'une face arrière correspondante à une zone interne d'une porte (200) de véhicule de telle sorte que, lorsque la porte (200) de véhicule est ouverte, elle libère du parfum dans la zone d'accès et que, lorsque la porte (200) de véhicule est fermée, elle est recouverte.

2. Véhicule selon la revendication 1, la face arrière de la feuille support (10) étant formée de telle sorte qu'elle est au moins partiellement adhésive ou qu'elle peut être fixée par adhérence statique à zone spécifiée de la porte (200) du véhicule.

3. Véhicule selon l'une des revendications précédentes, la forme de la feuille support (10) étant adaptée à la forme de la zone de la porte (200) de véhicule à laquelle elle doit être fixée.

4. Véhicule selon l'une des revendications précédentes, la feuille support (10) étant agencée dans la zone supérieure et orientée vers l'arrière du véhicule de la porte (200) du véhicule.

5. Véhicule selon l'une des revendications précédentes, la feuille support (10) étant agencée au niveau du joint (201) de porte ou dans une zone entre le joint (201) de porte et le cadre (202) de fenêtre.

6. Véhicule selon l'une des revendications précédentes, la feuille support (10) étant agencée dans une zone d'une tôle interne (204) de porte et au-dessus d'une serrure (203) de porte.

7. Véhicule selon l'une des revendications précédentes, la porte (200) de véhicule étant une porte de conducteur.

8. Véhicule selon l'une des revendications précédentes, le véhicule présentant en outre un ou plusieurs moyens qui sont conçus pour une mise en scène optique et/ou acoustique du parfum mis à disposition par la feuille support (10) lors de l'ouverture de la porte (200) de véhicule selon des critères spécifiés.
